# EUROPÄISCHE PATENTSCHRIFT

(11) **EP 3 321 010 B1**
(45) Veröffentlichungstag und Bekanntmachung des Hinweises auf die Patenterteilung: **18.12.2019**
(21) Anmeldenummer: 17186296.4
(22) Anmeldetag: 15.08.2017
(51) Int. Cl.: B22F 3/105, B33Y 30/00, B33Y 40/00, B29C 64/20

(54) **AUSPACKEINRICHTUNG ZUM AUSPACKEN EINES ADDITIV HERGESTELLTEN DREIDIMENSIONALEN OBJEKTS AUS DEM DIESES UMGEBENDEN BAUMATERIAL**
UNPACKING DEVICE FOR UNPACKING AN ADDITIVELY MANUFACTURED THREE-DIMENSIONAL OBJECT FROM THE SURROUNDING CONSTRUCTION MATERIAL
DISPOSITIF DE DÉBALLAGE PERMETTANT LE DÉBALLAGE D'UN OBJET TRIDIMENSIONNEL CONSTRUIT PAR FABRICATION ADDITIVE EN MATÉRIAU DE CONSTRUCTION ENTOURANT LEDIT OBJET

(30) Priorität: 14.11.2016 DE 102016121773
(43) Veröffentlichungstag der Anmeldung: 16.05.2018
(73) Patentinhaber: CL Schutzrechtsverwaltungs GmbH, 96215 Lichtenfels (DE)
(72) Erfinder: DR. BECHMANN, Florian, 96215 Lichtenfels (DE); ZEULNER, Fabian, 96215 Lichtenfels (DE); Stammberger, Jens, 96472 Rödental (DE); Hetzel, Ralf, 96231 Bad Staffelstein (DE)
(74) Vertreter: Hafner & Kohl Patent- und Rechtsanwälte Partnerschaft mbB

(56) Entgegenhaltungen:
- EP-A1- 2 289 652
- EP-A1- 3 321 010
- DE-A1-102004 041 633
- DE-A1-102007 033 434
- DE-A1-102009 029 765
- US-A1- 2002 090 410
- US-A1- 2013 278 920

## Beschreibung

Die Erfindung betrifft eine Auspackstation für eine Anlage zur additiven Herstellung dreidimensionaler Objekte gemäß dem Oberbegriff des Patentanspruchs 1, umfassend wenigstens eine Auspackeinrichtung zum Auspacken eines additiv hergestellten dreidimensionalen Objekts aus dem dieses nach Beendigung eines additiven Bauvorgangs umgebenden nicht verfestigten Baumaterial.

Eine solche Auspackstation geht beispielsweise aus der US 2002/090410 A1 hervor.

Die additive Herstellung dreidimensionaler Objekte durch sukzessive schichtweise selektive Belichtung und damit einhergehende sukzessive schichtweise selektive Verfestigung von Baumaterialschichten aus einem vermittels (hoch)energetischer Energiestrahlung, insbesondere Laserstrahlung, verfestigbaren Baumaterial findet typischerweise in einem Bauraum bzw. in einer Baukammer eines Baumoduls statt. Die additiv hergestellten dreidimensionalen Objekte sind nach Beendigung des additiven Bauvorgangs von nicht verfestigtem pulverartigen bzw. -förmigen Baumaterial umgeben.

Zum Auspacken der additiv hergestellten dreidimensionalen Objekte aus dem diese umgebenden Baumaterial sind Auspackeinrichtungen bekannt. Entsprechende Auspackeinrichtungen können z. B. als Saugeinrichtungen ausgebildet sein, welche zum Absaugen des das oder die auszupackende(n) dreidimensionale(n) Objekt(e) umgebenden nicht verfestigten Baumaterials eingerichtet sind. Dabei ist es üblich, dass ein einen Bestandteil einer entsprechenden Saugeinrichtung bildendes Saugelement, z. B. in Form einer Sauglanze, manuell gehandhabt wird.

Dieses Vorgehen ist insbesondere im Hinblick auf Automatisierbarkeit, Effizienz und Sicherheit des Auspackvorgangs verbesserungswürdig.

Der Erfindung liegt die Aufgabe zugrunde, eine, insbesondere im Hinblick auf Automatisierbarkeit, Effizienz und Sicherheit des Auspackvorgangs, verbesserte Auspackeinrichtung zum Auspacken eines additiv hergestellten dreidimensionalen Objekts aus dem dieses nach Beendigung eines additiven Bauvorgangs umgebenden nicht verfestigten Baumaterial anzugeben.

Die Aufgabe wird durch eine Auspackstation für eine Anlage zur additiven Herstellung dreidimensionaler Objekte gemäß Anspruch 1 gelöst. Die hierzu abhängigen Ansprüche betreffen mögliche Ausführungsformen der Auspackstation.

Die hierin beschriebene Auspackstation umfasst eine Auspackeinrichtung zum Auspacken eines additiv hergestellten dreidimensionalen Objekts ("Objekt") aus dem dieses nach Beendigung eines additiven Bauvorgangs umgebenden (, im Rahmen der additiven Herstellung des Objekts erfolgenden sukzessiven schichtweisen selektiven Belichtung und damit einhergehenden sukzessiven schichtweisen selektiven Verfestigung von Baumaterialschichten, verfestigbaren Baumaterial) nicht verfestigten pulverartigen bzw. -förmigen Baumaterial. Bei dem Baumaterial handelt es sich beispielsweise um ein Metallpulver; gleichwohl sind als Baumaterial auch Keramik- oder Kunststoffpulver denkbar. Unter Auspacken ist im Allgemeinen ein Entfernen von dem das jeweilige Objekt umgebenden Baumaterial zu verstehen; das jeweilige Objekt wird von dem dieses umgebenden Baumaterial "befreit".

Die hierin beschriebene Auspackeinrichtung ist als ein wenigstens drei (unterschiedliche) Roboterachsen aufweisender Roboter ("Auspackroboter"), insbesondere als ein wenigstens drei (unterschiedliche) Roboterachsen aufweisender Industrieroboter, ausgebildet bzw. umfasst wenigstens einen, d. h. gegebenenfalls auch mehrere, solche(n) Roboter.

Ein entsprechender Roboter weist typischerweise wenigstens einen Roboterarm auf, welcher mehrere über Gelenkelemente gelenkig miteinander verbundene, typischerweise seriell nacheinander geschaltet angeordnete Roboterglieder umfasst. Die Roboterachsen sind typischerweise jeweiligen über Gelenkelemente miteinander verbundenen Robotergliedern zugeordnet. Der Roboter kann z. B. als ein Gelenk- oder Knickarmroboter mit mehreren seriell nacheinander geschaltet angeordneten, über jeweilige Gelenkelemente gelenkig miteinander verbundenen Robotergliedern ausgeführt sein. Eines, mehrere oder alle Gelenkelemente des Roboters können als Drehgelenke ausgebildet sein. Grundsätzlich kann der Roboter jedwede Art von wenigstens drei Roboterachsen aufweisender Roboter bzw. Industrieroboter sein.

An einer Roboterachse ist wenigstens ein Auspackwerkzeug, welches zum Auspacken eines additiv hergestellten dreidimensionalen Objekts aus dem dieses nach Beendigung eines additiven Bauvorgangs umgebenden nicht verfestigten Baumaterial eingerichtet ist, angeordnet oder ausgebildet. Bei der Roboterachse, an welcher das wenigstens eine Auspackwerkzeug angeordnet oder ausgebildet ist, handelt es sich typischerweise um eine Roboterachse, welche einem ein freies Ende des Roboterarms bildenden Roboterglied zugeordnet ist.

Durch die Ausbildung der Auspackeinrichtung als Roboter bzw. den Umstand, dass die Auspackeinrichtung wenigstens einen entsprechenden Roboter umfasst, ist ein automatisierbares bzw. automatisiertes Auspacken jeweiliger Objekte möglich. Es ist nicht notwendig, dass ein einen Bestandteil einer Saugeinrichtung bildendes Saugelement manuell gehandhabt wird. Auspackvorgänge sind sowohl im Hinblick auf Automatisierbarkeit, Effizienz und Sicherheit verbessert.

Mithin liegt eine insbesondere im Hinblick auf Automatisierbarkeit, Effizienz und Sicherheit des Auspackvorgangs, verbesserte Auspackeinrichtung zum Auspacken eines additiv hergestellten dreidimensionalen Objekts aus dem dieses nach Beendigung eines additiven Bauvorgangs umgebenden nicht verfestigten Baumaterial vor.

Der Roboter kann mehr als drei Roboterachsen, insbesondere fünf, sechs oder mehr, Roboterachsen aufweisen. Je mehr Roboterachsen der Roboter aufweist, desto größer ist seine Bewegungsfreiheit im Rahmen des Auspackens jeweiliger Objekte. Es wurde erwähnt, dass der Roboter als Gelenk- bzw. Knickarmroboter ausgeführt sein kann. Eine zweckmäßige Ausführungsform sieht eine Ausbildung des Roboters als fünf- oder sechsachsiger Gelenk- bzw. Knickarmroboter vor.

Unabhängig von deren Anzahl und somit auch von der konkreten Ausführung des Roboters sind jeweilige Roboterachsen typischerweise unabhängig voneinander ansteuerbar. Die Roboterachsen sind entsprechend auch unabhängig voneinander bewegbar. Typischerweise ist jede Roboterachse in wenigstens einem Bewegungsfreiheitsgrad bewegbar.

Das Auspackwerkzeug kann ein einen Teil einer Saug- und/oder Gebläseeinrichtung bildendes Saug- und/oder Gebläsewerkzeug, insbesondere eine Saugdüse oder -lanze oder eine Gebläsedüse oder -lanze, sein bzw. ein solches Saug- und/oder Gebläsewerkzeug umfassen. Ein jeweiliges Saug- und/oder Gebläsewerkzeug ist über, z. B. an oder in dem Roboter angeordnete oder ausgebildete, von einer Saug- bzw. Gebläseströmung durchströmbare Leitungselemente mit einem eine Saug- bzw. Gebläseströmung erzeugenden Teil der Saug- und/oder Gebläseeinrichtung verbunden. Vermittels entsprechender Saug- und/oder Gebläsewerkzeuge erfolgt das Auspacken jeweiliger Objekte über ein Absaugen und/oder Abblasen von Baumaterial. Es ist denkbar, dass ein kombinierter Auspackvorgang ein Absaugen von Baumaterial vermittels eines Saugwerkzeugs und ein Abblasen von verbliebenem Baumaterial vermittels eines Gebläsewerkzeugs vorsieht. Der Saug- und der Gebläsevorgang können gleichzeitig erfolgen, wobei es möglich ist, dass das Saugwerkzeug eine von dem Gebläsewerkzeug erzeugte, über das Objekt geführte, Baumaterial enthaltende Gebläseströmung vermittels einer von dem Saugwerkzeug erzeugten Saugströmung aufsaugt, oder zeitlich versetzt erfolgen. In allen Fällen lässt sich ein inertes Auspacken jeweiliger Objekte realisieren; mithin kann eine verwendete Saug- und/oder Gebläseströmung inert sein. Neben Auspackwerkzeugen in Form entsprechender Saug- und/oder Gebläsewerkzeuge sind selbstverständlich auch andere Auspackwerkzeuge, d. h. z. B. Auspackwerkzeuge in Form von Bürsten, Pinseln, Schaufeln oder dergleichen, denkbar.

Ein jeweiliges Auspackwerkzeug kann lösbar an der jeweiligen Roboterachse angeordnet bzw. befestigt sein. Zur Realisierung einer lösbaren Befestigung eines jeweiligen Auspackwerkzeugs können seitens des Roboters und/oder seitens des Auspackwerkzeugs geeignete, insbesondere mechanische, Befestigungsschnittstellen angeordnet oder ausgebildet sein, welche eine lösbare Befestigung eines Auspackwerkzeugs an der Roboterachse ermöglichen. Eine lösbare Befestigung eines Auspackwerkzeugs an der jeweiligen Roboterachse kann jedoch auch dadurch realisiert sein, dass die Roboterachse ein Greifelement umfasst, welches zum Greifen eines Auspackwerkzeugs eingerichtet ist.

Durch die lösbare Anordnung bzw. Befestigung eines jeweiligen Auspackwerkzeugs an der jeweiligen Roboterachse ist es möglich, dass ein Auspackwerkzeug bedarfsweise auswechselbar an der jeweiligen Roboterachse angeordnet bzw. befestigt ist. Ein Auswechselvorgang eines jeweiligen Auspackwerkzeugs kann ebenso automatisiert erfolgen. Der Roboter kann, z. B. in einem hierfür eigens vorgesehenen Werkzeugwechselmodus bzw. -programm, eingerichtet sein, einen Wechsel eines Auspackwerkzeugs vorzunehmen. Hierbei kann der Roboter z. B. in eine Auswechselposition bewegbar sein, in welcher der Roboter selbstständig Auspackwerkzeugwechsel vornimmt. In der Auswechselposition kann der Roboter, d. h. wenigstens die Roboterachse, an welcher das Auspackwerkzeug lösbar zu befestigen bzw. befestigt ist, Auspackwerkzeuge in einen der Auspackeinrichtung zugeordneten Werkzeugspeicher geben bzw. aus einem der Auspackeinrichtung zugeordneten Werkzeugspeicher entnehmen.

Die Auspackeinrichtung umfasst typischerweise eine hard- und/oder softwaremäßig implementierte Steuereinrichtung, welche zur Erzeugung von die Bewegungen der Roboterachsen im Betrieb des Roboters steuernden Steuerungsinformationen eingerichtet ist. Die Steuereinrichtung kann eingerichtet sein, entsprechende Steuerungsinformationen auf Grundlage von die geometrisch-konstruktive Gestalt eines jeweils auszupackenden Objekts beschreibenden Daten, insbesondere auf Grundlage von die geometrisch-konstruktive Gestalt eines jeweils auszupackenden Objekts beschreibenden Baudaten, zu erzeugen. Die Bewegungen der Roboterachsen können sonach auf die geometrisch-konstruktive Gestalt bzw. die geometrisch-konstruktiven Merkmale des auszupackenden Objekts, d. h. insbesondere die Außen- und/oder Innenkontur, etwaige Hinterschneidungen, etc., abgestimmt sein. Auspackvorgänge können individuell unter Berücksichtigung der geometrisch-konstruktiven Gestalt eines jeweils auszupackenden Objekts gesteuert werden. Derart kann der Rechenaufwand zur Erzeugung von entsprechenden die Bewegungen der Roboterachsen bzw. der Roboterglieder steuernden Steuerungsinformationen (erheblich) reduziert und insbesondere die Effizienz der mit der Auspackeinrichtung durchführbaren bzw. durchgeführten Auspackvorgänge (erheblich) gesteigert werden.

Die Auspackstation umfasst eine, insbesondere quaderförmige, Auspackkammer, welche einen Teil einer der Auspackstation zugehörigen Gehäusekonstruktion bilden kann. Die Auspackstation ist typischerweise inertisierbar bzw. inertisiert. Der oder die der Auspackeinrichtung zugehörige(n) Roboter ist bzw. sind an oder in einer die Auspackkammer (mit)begrenzenden Boden-, Seiten- oder Deckenwandung der Auspackkammer angeordnet oder ausgebildet. Grundsätzlich sind sowohl stehende als auch (seitlich) hängende Anordnungen von Robotern denkbar.

Die Auspackeinrichtung bzw. der oder die der Auspackeinrichtung zugehörige(n) Roboter kann bzw. können ortsfest oder in wenigstens einem Bewegungsfreiheitsgrad bewegbar gelagert in der Auspackkammer angeordnet oder ausgebildet sein. Sofern der oder die Roboter nicht über eigene Bewegungsantriebe verfügen, können auspackkammerseitig geeignete Bewegungseinrichtungen vorhanden sein, welche eine, insbesondere entlang einer bestimmten Bewegungsbahn, geführte Bewegung eines Roboters ermöglichen. Entsprechende Bewegungseinrichtungen können z. B. eine geführte Bewegung eines Roboters entlang eines auszupackenden Objekts innerhalb eines das auszupackende Objekt enthaltenden, in die Auspackstation bewegten Baumoduls ermöglichen. Der Roboter kann dabei in (vor)definierte Auspackpositionen relativ zu dem auszupackenden Objekt bzw. relativ zu dem Baumodul bewegt werden. Die Auspackpositionen können wiederum auf Grundlage der geometrisch-konstruktiven Gestalt des auszupackenden Objekts gewählt sein. Derart kann der Rechenaufwand zur rechnerbasierten Auswahl zweckmäßiger Auspackpositionen des Roboters reduziert werden.

Neben der Auspackstation betrifft die Erfindung auch eine Anlage zur additiven Herstellung dreidimensionaler Objekte gemäß Anspruch 10. Die Anlage zeichnet sich dadurch aus dass sie wenigstens eine wie beschriebene Auspackstation umfasst. Mithin gelten sämtliche Ausführungen im Zusammenhang mit der Auspackstation analog für die Anlage.

Neben der Auspackstation umfasst die Anlage typischerweise wenigstens eine Vorrichtung zur additiven Herstellung dreidimensionaler Objekte, d. h. beispielsweise technischer Bauteile bzw. technischer Bauteilgruppen, durch sukzessives schichtweises selektives Belichten und damit einhergehendes Verfestigen von Baumaterialschichten aus einem vermittels eines Laserstrahls verfestigbaren Baumaterial. Die selektive Verfestigung jeweiliger selektiv zu verfestigender Baumaterialschichten erfolgt auf Grundlage objektbezogener Baudaten. Entsprechende Baudaten beschreiben die geometrisch-konstruktive Gestalt des jeweils additiv herzustellenden Objekts und können beispielsweise "geslicte" CAD-Daten eines jeweiligen additiv herzustellenden Objekts beinhalten. Die Vorrichtung kann als SLM-Vorrichtung, d. h. als Vorrichtung zur Durchführung selektiver Laserschmelzverfahren (SLM-Verfahren), oder als SLS-Vorrichtung, d. h. als Vorrichtung zur Durchführung selektiver Lasersinterverfahren (SLS-Verfahren), ausgebildet sein.

Die Erfindung ist anhand von Ausführungsbeispielen in den Zeichnungsfiguren näher erläutert. Dabei zeigen:
- Fig. 1: eine Prinzipdarstellung einer Auspackstation gemäß einem Ausführungsbeispiel; und
- Fig. 2: eine Prinzipdarstellung eines Roboters gemäß einem Ausführungsbeispiel.

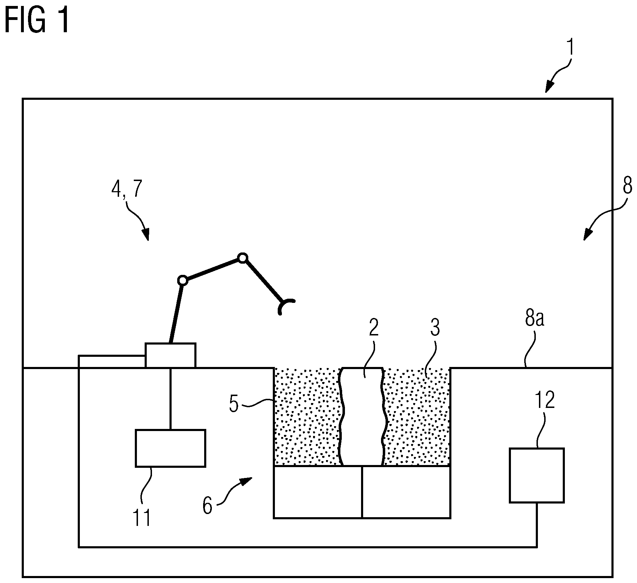

Fig. 1 zeigt eine Prinzipdarstellung einer Auspackstation 1 gemäß einem Ausführungsbeispiel.

Die Auspackstation 1 ist einer Vorrichtung (nicht gezeigt) zur additiven Herstellung dreidimensionaler Objekte 2, d. h. insbesondere technischer Bauteile bzw. technischer Bauteilgruppen, zugeordnet. Die Vorrichtung ist zur additiven Herstellung dreidimensionaler Objekte 2 durch sukzessives schichtweises selektives Belichten und damit einhergehendes Verfestigen von Baumaterialschichten aus einem verfestigbaren Baumaterial 3, d. h. z. B. eines Metallpulvers, vermittels eines Laserstrahls eingerichtet. Die selektive Verfestigung jeweiliger selektiv zu verfestigender Baumaterialschichten erfolgt auf Grundlage von objektbezogenen Baudaten. Entsprechende Baudaten beschreiben die geometrische bzw. geometrisch-konstruktive Gestalt des jeweils additiv herzustellenden Objekts 2.

Die Vorrichtung wie auch die dieser zugeordnete Auspackstation 1 bilden Bestandteile einer übergeordneten Anlage (nicht gezeigt) zur additiven Herstellung dreidimensionaler Objekte 2.

Die Auspackstation 1 umfasst eine Auspackeinrichtung 4. Die Auspackeinrichtung 4 ist in einer inertisierbaren bzw. inertisierten Auspackkammer 8 der Auspackstation 1 angeordnet. Die Auspackkammer 8 kann einen Teil einer der Auspackstation 1 zugehörigen Gehäusekonstruktion (nicht näher bezeichnet) bilden.

Die Auspackeinrichtung 4 ist zum Auspacken eines additiv hergestellten dreidimensionalen Objekts 2 aus dem dieses nach Beendigung eines additiven Bauvorgangs umgebenden nicht verfestigten pulverartigen bzw. -förmigen Baumaterial 3 eingerichtet. In dem in Fig. 1 gezeigten Ausführungsbeispiel ist das Objekt 2 nebst dem dieses umgebenden Baumaterial 3 in einem Bauraum 5 bzw. in einer Baukammer eines in die Auspackstation 1 bewegten Baumoduls 6 angeordnet.

Die Auspackeinrichtung 4 ist als ein wenigstens drei (unterschiedliche) Roboterachsen A1 - A6 aufweisender Roboter 7 ausgebildet. Der Roboter 7 ist z. B. auf einer die Auspackkammer 8 bodenseitig begrenzenden Bodenwandung 8a der Auspackkammer 8 angeordnet. Denkbar ist es jedoch auch, dass der Roboter 7 an einer die Auspackkammer 8 (mit)begrenzenden Seiten- oder Deckenwandung der Auspackkammer 8 angeordnet oder ausgebildet ist. Grundsätzlich sind sowohl stehende als auch (seitlich) hängende Anordnungen von Robotern 7 denkbar.

Der Roboter 7 kann ortsfest oder in wenigstens einem Bewegungsfreiheitsgrad bewegbar gelagert in der Auspackkammer 8 angeordnet sein. Sofern der Roboter 7 nicht über eigene Bewegungsantriebe verfügt, können auspackkammerseitig geeignete Bewegungseinrichtungen (nicht gezeigt) vorhanden sein, welche eine, insbesondere entlang einer bestimmten Bewegungsbahn, geführte Bewegung des Roboters 7 ermöglichen. Entsprechende Bewegungseinrichtungen können z. B. eine geführte Bewegung des Roboters 7 entlang des auszupackenden Objekts 2 bzw. innerhalb des das auszupackende Objekt 2 enthaltenden, in die Auspackstation 1 bewegten Baumoduls 6 ermöglichen. Der Roboter 7 kann dabei in (vor)definierte Auspackpositionen bewegt werden, welche auf Grundlage der geometrisch-konstruktiven Gestalt des auszupackenden Objekts 2 gewählt sein können.

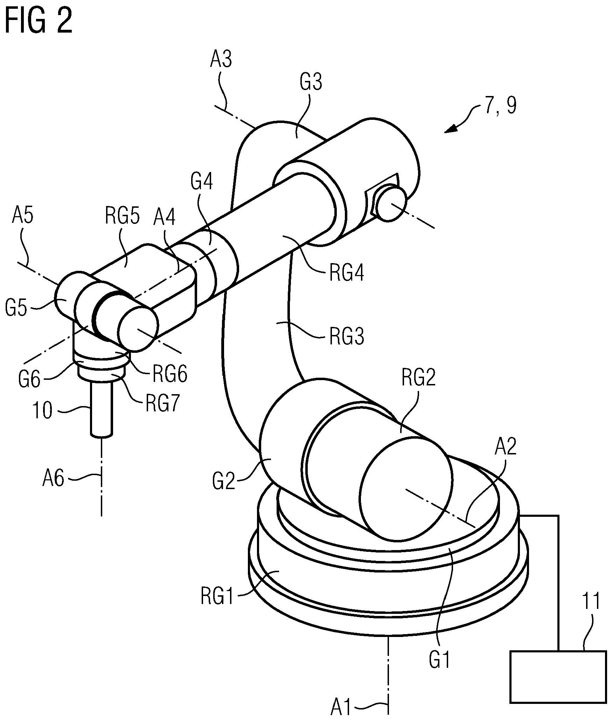

Fig. 2 zeigt eine Prinzipdarstellung eines Roboters 7 gemäß einem Ausführungsbeispiel, welcher Roboter 7 in der in Fig. 1 gezeigten Auspackstation 1 verwendet werden kann.

Der Roboter 7 ist als Gelenk- oder Knickarmroboter ausgeführt und umfasst einen Roboterarm 9. Der Roboterarm 9 umfasst mehrere seriell nacheinander geschaltet angeordnete, über Gelenkelemente G1 - G6 gelenkig miteinander verbundene Roboterglieder RG 1 - RG7. Bei den Gelenkelementen G1 - G6 handelt es sich um Drehgelenke. Die Gelenkelemente G1 - G6 stellen eine drehbare Verbindung jeweils (unmittelbar) benachbart angeordneter Roboterglieder RG 1 - RG7 her. Ersichtlich sind die Roboterachsen A1 - A1 den Gelenkelementen G1 - G6 bzw. den über die Gelenkelemente G1 - G6 miteinander verbundenen Robotergliedern RG1 - RG7 zugeordnet.

Die jeweiligen Roboterachsen A1 - A6 bzw. die Gelenkelemente G1 - G6 bzw. die Roboterglieder RG1 - RG7 sind unabhängig voneinander ansteuerbar und entsprechend unabhängig voneinander bewegbar. Die Steuerung der Bewegungen der Roboterglieder RG1 - RG7, d. h. die Steuerung des Betriebs des Roboters 7, erfolgt über eine hard- und/oder softwaremäßig implementierte Steuereinrichtung 11.

Bei den Robotergliedern RG1 - RG7 handelt es sich in dem in Fig. 2 gezeigten Ausführungsbeispiel um eine Basis (Roboterglied RG1), ein dieser nachgeschaltetes, um die Roboterachse A1 drehbar gelagertes Karussell (Roboterglied RG2), eine diesem nachgeschaltete, um die Roboterachse A2 drehbar gelagerte Schwinge (Roboterglied RG3), einen dieser nachgeschaltete, um die Roboterachse A3 drehbar gelagerten Ausleger (Roboterglied RG4), eine diesem nachgeschaltete, um die Roboterachse A4 drehbar gelagerte mehrachsige Roboterhand (Roboterglied RG5), eine dieser nachgeschaltete, um die Roboterachse A5 drehbar gelagerte Befestigungseinrichtung (Roboterglied RG6) sowie eine dieser nachgeschaltete, um die Roboterachse A6 drehbar gelagerte Werkzeugaufnahmeeinrichtung (Roboterglied RG7). Anstelle der Werkzeugaufnahmeeinrichtung könnte auch ein Roboterwerkzeug angeordnet sein.

An dem (letzten) Gelenk G6 bzw. dem das freie Ende des Roboterarms 9 bildenden (letzten) Roboterglied RG7 ist ein Auspackwerkzeug 10, welches zum Auspacken eines additiv hergestellten dreidimensionalen Objekts 2 aus dem dieses nach Beendigung eines additiven Bauvorgangs umgebenden nicht verfestigten Baumaterial 3 eingerichtet ist, angeordnet.

Bei dem Auspackwerkzeug 10 handelt es sich in den in den Fig. gezeigten Ausführungsbeispielen um ein einen Teil einer Saug- und/oder Gebläseeinrichtung (nicht gezeigt) bildendes Saug- und/oder Gebläsewerkzeug, insbesondere eine Saugdüse bzw. -lanze oder eine Gebläsedüse bzw. -lanze. Das Saug- und/oder Gebläsewerkzeug ist über, z. B. an oder in dem Roboter 7 angeordnete oder ausgebildete, von einer Saug- bzw. Gebläseströmung durchströmbare Leitungselemente (nicht gezeigt) mit einem eine Saug- bzw. Gebläseströmung erzeugenden Teil der Saug- und/oder Gebläseeinrichtung verbunden. Das Auspacken jeweiliger Objekte 2 erfolgt sonach über ein Absaugen und/oder Abblasen des Baumaterials 3 von dem Objekt 2. Dabei ist ein inertes Auspacken des Objekts 2 möglich, da eine inerte Saug- und/oder Gebläseströmung, d. h. z. B. eine Argon- oder Stickstoffströmung, verwendet werden kann.

Das im Rahmen des Auspackens des Objekts 2 von diesem entfernte Baumaterial 3 kann in eine Aufbereitungseinrichtung 12 (vgl. Fig. 1) geführt werden, welche zur Aufbereitung des Baumaterials 3 eingerichtet ist, sodass dieses gegebenenfalls in einem additiven Bauvorgang wiederverwendet werden kann.

Das Auspackwerkzeug 10 kann lösbar an der Roboterachse A6 bzw. dem Roboterglied RG7 angeordnet bzw. befestigt sein. Zur Realisierung einer lösbaren Befestigung des Auspackwerkzeugs 10 können seitens der Roboters 7 und/oder seitens des Auspackwerkzeugs 10 geeignete, insbesondere mechanische, Befestigungsschnittstellen (nicht gezeigt) angeordnet oder ausgebildet sein, welche eine lösbare Befestigung des Auspackwerkzeugs 10 an der Roboterachse A6 bzw. dem Roboterglied RG7 ermöglichen. Eine lösbare Befestigung des Auspackwerkzeugs 10 an der Roboterachse A6 bzw. dem Roboterglied RG7 kann auch dadurch realisiert sein, dass die Roboterachse A6 bzw. das Roboterglied RG7 ein Greifelement umfasst, welches zum Greifen des Auspackwerkzeugs 10 eingerichtet ist.

Durch die lösbare Anordnung bzw. Befestigung eines Auspackwerkzeugs 10 an der Roboterachse A6 bzw. dem Roboterglied RG7 ist es möglich, dass ein Auspackwerkzeug 10 bedarfsweise auswechselbar an der Roboterachse A6 bzw. dem Roboterglied RG7 angeordnet bzw. befestigt ist. Der Roboter 7 kann, z. B. in einem hierfür eigens vorgesehenen Werkzeugwechselmodus bzw. -programm, eingerichtet sein, einen automatisierten Wechsel eines Auspackwerkzeugs 10 vorzunehmen. Hierbei kann der Roboter 7, d. h. insbesondere die Roboterachse A6 bzw. das Roboterglied RG7, z. B. in eine Auswechselposition bewegbar sein, in welcher der Roboter 7 selbstständig einen Auspackwerkzeugwechsel vornimmt. In der Auswechselposition kann der Roboter 7, d. h. wenigstens die Roboterachse A6 bzw. das Roboterglied RG7, an welcher das Auspackwerkzeug 10 lösbar zu befestigen bzw. befestigt ist, Auspackwerkzeuge 10 in einen der Auspackeinrichtung 4 zugeordneten Werkzeugspeicher (nicht gezeigt) geben bzw. aus einem der Auspackeinrichtung 4 zugeordneten Werkzeugspeicher entnehmen.

Wie erwähnt, umfasst die Auspackeinrichtung 4 eine Steuereinrichtung 11, welche zur Erzeugung von die Bewegungen der Roboterachsen A1 - A6 bzw. der Roboterglieder RG1 - RG7 im Betrieb des Roboters 7 steuernden Steuerungsinformationen eingerichtet ist. Die Steuereinrichtung 11 kann eingerichtet sein, entsprechende Steuerungsinformationen auf Grundlage von die geometrisch-konstruktive Gestalt des auszupackenden Objekts 2 beschreibenden Daten, insbesondere auf Grundlage von die geometrisch-konstruktive Gestalt des auszupackenden Objekts 2 beschreibenden Baudaten, zu erzeugen. Auspackvorgänge können derart individuell unter Berücksichtigung der geometrisch-konstruktiven Gestalt des jeweils auszupackenden Objekts 2 gesteuert werden. Der Rechenaufwand zur Erzeugung von entsprechenden die Bewegungen der Roboterachsen A1 - A6 bzw. der Roboterglieder RG1 - RG7 steuernden Steuerungsinformationen kann derart reduziert werden.

## Patentansprüche

1. Auspackstation (1) für eine Anlage zur additiven Herstellung dreidimensionaler Objekte (2), umfassend wenigstens eine Auspackeinrichtung (4) zum Auspacken eines additiv hergestellten dreidimensionalen Objekts (2) aus dem dieses nach Beendigung eines additiven Bauvorgangs umgebenden nicht verfestigten Baumaterial (3), **dadurch gekennzeichnet, dass** die Auspackeinrichtung (4) als ein wenigstens drei Roboterachsen (A1 - A6) aufweisender Roboter (7), insbesondere Industrieroboter, ausgebildet ist, wobei an einer Roboterachse (A6) wenigstens ein Auspackwerkzeug (10), welches zum Auspacken eines additiv hergestellten dreidimensionalen Objekts (2) aus dem dieses nach Beendigung eines additiven Bauvorgangs umgebenden nicht verfestigten Baumaterial (3) eingerichtet ist, angeordnet oder ausgebildet ist, oder die Auspackeinrichtung (4) wenigstens einen solchen Roboter (7) umfasst, wobei die Auspackstation (1) eine Auspackkammer (8) aufweist, und wobei die Auspackeinrichtung (4) an oder in einer die Auspackkammer (8) begrenzenden Boden-, Seiten- oder Deckenwandung angeordnet oder ausgebildet ist.

2. Auspackstation nach Anspruch 1, **dadurch gekennzeichnet, dass** der Roboter (7) mehr als drei Roboterachsen (A1 - A6), insbesondere fünf oder sechs, Roboterachsen (A1 - A6) aufweist.

3. Auspackstation nach Anspruch 1 oder 2, **dadurch gekennzeichnet, dass** wenigstens ein Teil der Roboterachsen (A1 - A6), insbesondere sämtliche Roboterachsen (A1 - A6), des Roboters (7) unabhängig voneinander ansteuerbar sind.

4. Auspackstation nach einem der vorhergehenden Ansprüche, **dadurch gekennzeichnet, dass** das Auspackwerkzeug (10) ein einen Teil einer Saug- und/oder Gebläseeinrichtung bildenden Saug- und/oder Gebläsewerkzeug, insbesondere eine Sauglanze oder eine Gebläselanze, ist.

5. Auspackstation nach einem der vorhergehenden Ansprüche, **dadurch gekennzeichnet, dass** das Auspackwerkzeug (10) lösbar an dem Roboter (7), insbesondere der jeweiligen Roboterachse (A1 - A6), angeordnet ist, sodass es bedarfsweise auswechselbar an der jeweiligen Roboterachse (A1 - A6) angeordnet ist.

6. Auspackstation nach einem der vorhergehenden Ansprüche, **gekennzeichnet durch** eine Steuereinrichtung (11), welche zur Erzeugung von die Bewegungen der Roboterachsen (A1 - A6) im Betrieb des Roboters (7) steuernden Steuerungsinformationen eingerichtet ist, wobei die Steuereinrichtung (11) eingerichtet ist, die Steuerungsinformationen auf Grundlage von die geometrisch-konstruktive Gestalt eines auszupackenden additiv hergestellten dreidimensionalen Objekts (2) beschreibenden Daten, insbesondere auf Grundlage von die geometrisch-konstruktive Gestalt eines auszupackenden additiv hergestellten dreidimensionalen Objekts (2) beschreibenden Baudaten, zu erzeugen.

7. Auspackstation nach einem der vorangehenden Ansprüche, **gekennzeichnet durch** eine quaderförmige Auspackkammer (8).

8. Auspackstation nach einem der vorangehenden Ansprüche, **dadurch gekennzeichnet, dass** die Auspackeinrichtung (4) ortsfest oder in wenigstens einem Bewegungsfreiheitsgrad bewegbar gelagert in der Auspackkammer (8) angeordnet oder ausgebildet ist.

9. Auspackstation nach Anspruch 8, **dadurch gekennzeichnet, dass** die Auspackeinrichtung (4) in wenigstens einem Bewegungsfreiheitsgrad bewegbar gelagert in der Auspackkammer (8) angeordnet oder ausgebildet ist, wobei die Auspackeinrichtung (4), insbesondere der Roboter (7), in definierte Auspackpositionen bewegbar ist, wobei die Auspackpositionen auf Grundlage der geometrisch-konstruktiven Gestalt des auszupackenden dreidimensionalen Objekts (2) gewählt sind.

10. Anlage zur additiven Herstellung dreidimensionaler Objekte (2), **dadurch gekennzeichnet, dass** sie wenigstens eine Auspackstation (1) nach einem der vorangehenden Ansprüche umfasst.

## Claims

1. Unpacking station (1) for a facility for additive manufacturing of three-dimensional objects (2), comprising at least one unpacking device (4) for unpacking an additively manufactured three-dimensional object (2) from the unconsolidated construction material (3) surrounding said object after completion of an additive construction process, **characterised in that** the unpacking device (4) is designed as a robot (7), in particular industrial robot, that comprises at least three robot axes (A1 - A6), wherein at least one unpacking tool (10) that is designed for unpacking an additively manufactured three-dimensional object (2) from the unconsolidated construction material (3) surrounding said object after completion of an additive construction process is arranged or formed on at least one robot axis (A6), or the unpacking device (4) comprises at least one robot (7) of this kind, wherein the unpacking station (1) comprises an unpacking chamber (8), and wherein the unpacking device (4) is arranged or formed on or in a base, side or cover wall that defines the unpacking chamber (8).

2. Unpacking station according to claim 1, **characterised in that** the robot (7) comprises more than three robot axes (A1 - A6), in particular five or six robot axes (A1 - A6).

3. Unpacking station according to either claim 1 or claim 2, **characterised in that** at least some of the robot axes (A1 - A6), in particular all the robot axes (A1 - A6), of the robot (7) can be actuated independently of one another.

4. Unpacking station according to any of the preceding claims, **characterised in that** the unpacking tool (10) is a suction tool and/or fan tool, in particular a suction lance or a fan lance, that forms part of a suction and/or fan apparatus.

5. Unpacking station according to any of the preceding claims, **characterised in that** the unpacking tool (10) is detachably arranged on the robot (7), in particular on the relevant robot axis (A1 - A6), such that it is, if necessary, arranged on the relevant robot axis (A1 - A6) so as to be interchangeable.

6. Unpacking station according to any of the preceding claims, **characterised by** a controller (1) that is designed for generating control information that controls the movements of the robot axes (A1 - A6) during operation of the robot (7), wherein the controller (11) is designed to generate the control information on the basis of data describing the geometric/structural shape of an additively manufactured three-dimensional object (2) to be unpacked, in particular on the basis of construction data describing the geometric/structural shape of an additively manufactured three-dimensional object (2) to be unpacked.

7. Unpacking station according to any of the preceding claims, **characterised by** a cuboid unpacking chamber (8).

8. Unpacking station according to any of the preceding claims, **characterised in that** the unpacking device (4) is arranged or formed in the unpacking chamber (8) so as to be stationary and/or in a manner mounted so as to be movable in at least one degree of freedom of movement.

9. Unpacking station according to claim 8, **characterised in that** the unpacking device (4) is arranged or formed in the unpacking chamber (8) in a manner mounted so as to be movable in at least one degree of freedom of movement, wherein the unpacking device (4), in particular the robot (7), is movable into defined unpacking positions, wherein the unpacking positions are selected on the basis of the geometric/structural shape of the three-dimensional object (2) to be unpacked.

10. Facility for additive manufacture of three-dimensional objects (2), **characterised in that** it comprises at least one unpacking station (1) according to any of the preceding claims.

## Revendications

1. Poste de déballage (1) pour une installation servant à fabriquer de manière additive des objets (2) tridimensionnels, comprenant au moins un dispositif de déballage (4) servant à déballer un objet (2) tridimensionnel fabriqué de manière additive, composé du matériau de construction (3) non consolidé entourant ledit objet une fois l'opération de construction additive terminée, **caractérisé en ce que** le dispositif de déballage (4) est réalisé sous la forme d'un robot (7) présentant au moins trois axes de robot (A1 - A6), en particulier sous la forme d'un robot industriel, dans lequel au moins un outil de déballage (10), lequel est mis au point, est disposé ou réalisé pour déballer un objet (2) tridimensionnel fabriqué de manière additive, composé du matériau de construction (3) non consolidé entourant ledit objet une fois une opération de construction additive terminée ou le dispositif de déballage (4) comprend au moins un robot (7) de ce type, dans lequel le poste de déballage (1) présente une chambre de déballage (8), et dans lequel le dispositif de déballage (4) est disposé ou réalisé au niveau de ou dans une paroi de fond, latérale ou de recouvrement délimitant la chambre de déballage (8).

2. Poste de déballage selon la revendication 1, **caractérisé en ce que** le robot (7) présente plus de trois axes de robot (A1 - A6), en particulier cinq ou six axes de robot (A1 - A6).

3. Poste de déballage selon la revendication 1 ou 2, **caractérisé en ce qu'**au moins une partie des axes de robot (A1 - A6), en particulier tous les axes de robot (A1 - A6), du robot (7) peuvent être pilotés indépendamment les uns des autres.

4. Poste de déballage selon l'une quelconque des revendications précédentes, **caractérisé en ce que** l'outil de déballage (10) est un outil aspirant et/ou soufflant formant un dispositif aspirant et/ou soufflant, en particulier une lance aspirante ou une lance soufflante.

5. Poste de déballage selon l'une quelconque des revendications précédentes, **caractérisé en ce que** l'outil de déballage (10) est disposé de manière amovible au niveau du robot (7), en particulier de l'axe de robot (A1 - A6) respectif, de sorte qu'il est disposé si besoin de manière interchangeable au niveau de l'axe de robot (A1 - A6) respectif.

6. Poste de déballage selon l'une quelconque des revendications précédentes, **caractérisé par** un dispositif de commande (11), lequel est mis au point pour produire des informations de commande commandant les déplacements des axes de robot (A1 - A6) lors du fonctionnement du robot (7), dans lequel le dispositif de commande (11) est mis au point pour produire les informations de commande sur la base de données décrivant la forme géométrique structurelle d'un objet (2) tridimensionnel fabriqué de manière additive à déballer, en particulier sur la base de données de construction décrivant la forme géométrique structurelle d'un objet (2) tridimensionnel fabriqué de manière additive à déballer.

7. Poste de déballage selon l'une quelconque des revendications précédentes, **caractérisé par** une chambre de déballage (8) de forme carrée.

8. Poste de déballage selon l'une quelconque des revendications précédentes, **caractérisé en ce que** le dispositif de déballage (4) est disposé ou réalisé dans la chambre de déballage (8) en étant monté de manière stationnaire ou de manière à pouvoir être déplacé selon au moins un degré de liberté de mouvement.

9. Poste de déballage selon la revendication 8, **caractérisé en ce que** le dispositif de déballage (4) est disposé ou réalisé dans la chambre de déballage (8) en étant monté de manière à pouvoir être déplacé selon au moins un degré de liberté de mouvement, dans lequel le dispositif de déballage (4), en particulier le robot (7), peut être déplacé dans des positions de déballage définies, dans lequel les positions de déballage sont choisies sur la base de la forme géométrique structurelle de l'objet (2) tridimensionnel à déballer.

10. Installation de fabrication additive d'objets (2) tridimensionnels, **caractérisée en ce qu'**elle comprend au moins un poste de déballage (1) selon l'une quelconque des revendications précédentes.
